(19)

**Europäisches Patentamt**
**European Patent Office**
**Office européen des brevets**

(11) **EP 4 362 319 A1**

(12) **EUROPEAN PATENT APPLICATION**

(43) Date of publication:
**01.05.2024 Bulletin 2024/18**

(21) Application number: **22204456.2**

(22) Date of filing: **28.10.2022**

(51) International Patent Classification (IPC):
**H02P 7/025** (2016.01)    **G03B 3/10** (2021.01)

(52) Cooperative Patent Classification (CPC):
**H02P 7/025; G03B 3/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Goodix Technology (Belgium) B.V.**
**3000 Leuven (BE)**

(72) Inventors:
- **Kurosz, Rafal Krzysztof**
  **3000 Leuven (BE)**
- **Stoev, Youlian Hristov**
  **3000 Leuven (BE)**
- **Thijs-Nica, Ioana Gabriela**
  **3000 Leuven (BE)**
- **Laneau, Johan**
  **3000 Leuven (BE)**

(74) Representative: **Nederlandsch Octrooibureau**
**P.O. Box 29720**
**2502 LS The Hague (NL)**

(54) **MOTION CONTROL MODULE TO ADJUST LENS POSITION IN A CAMERA SYSTEM**

(57)    A motion control device comprising a driver, a sensor, a memory to store characterization information, calibration circuitry to control the driver and the sensor to generate calibration information for the motor, adjustment circuitry to adjust a first input of the adjustment circuitry based on a second input of the adjustment circuitry, the first input is based on the characterization information and the second input is based on the calibration information, the characterization information is based on a pattern representing common features of one or more parameters representing the behaviour of a plurality of lens modules at a plurality of positions and wherein the first input is adjusted based on a difference between the characterization information and the calibration information at a determined position among the plurality of positions.

**Fig. 10**

Calibration based on one point

## Description

### Field of the invention

The present invention relates to a motion control module for a camera system configured to adjust a position of a lens module using the motion control module, to a camera system comprising the motion control module, and to a method for adjusting a position of a lens module using the motion control module.

### Background art

The motion control of camera lenses in the mobile consumer devices (smart-phones) are subject to diverse requirements, which can be met using different combination of sensors, control algorithms and actuators.

On the actuator side, voice-coil motors (VCM) are a relatively mature technology, offering low price, high precision, high speed, sufficient range (stroke) and force, as well as relatively consistent behavior. A VCM actuator is driven by a dedicated motion-control chip and it moves the individual lens, or a lens group based on the demanded set-points from the user and higher-level logic. The consistent behavior is particularly challenging due to the limited price and therefore related high variability of the devices.

On the sensor side, the motion control chip can use different signals measured from the VCM and the lens to perform its operation in feedback. These may include some of the Voltage (V), Current (I), Lens Position (P).

Based on the signals used in the operation of the actuator several important cases can be distinguished:

- Open-Loop (OL) control configuration: As one extreme case, spring-supported VCMs can be operated without any sensor (VIP) feedback, which results in lower price of the device.
- Closed-Loop (CL) control configuration: To get better performance in the high-end devices, a position (P) feedback is performed, using for example a dedicated Hall sensor, which results typically in higher price range for the product.
- Self-Sensing (SS) control configuration: A cheaper, intermediary option is to use signals which are more easy to obtain, like VCM voltage (V) and current (I).

A typical dynamic relation between the driver chip (actuator) signal and the lens position (P) in many precision servo control systems is also valid in the case of spring-based VCM and can be presented as the below Transfer Function (TF):

$$P(s) = \frac{\omega_0}{s^2 + 2\zeta\omega_0 s + \omega_0^2}, \qquad\qquad \text{(equation 1)}$$

where s is the Laplace variable, $\omega_0 = 2\pi F_0$ where $F_0$ is the resonant frequency of a camera lens module, $\zeta = 1/(2 * Q)$ is the damping, and Q is the quality factor of a camera lens module.

It is well known that spring-based VCMs with a transfer function as defined above, have naturally defined zero position - this is the position where the actuator is positioned when the actuator input is zero.

The main uncertain parameters in equation 1 are $F_0$ and Q (or alternatively damping $\zeta$). The methods for determining the values of these parameters, known as "system identification" methods, are well known. As an example, the book "System Identification: Theory for the User" by Ljung, L., 1999, Prentice Hall PTR describes such methods.

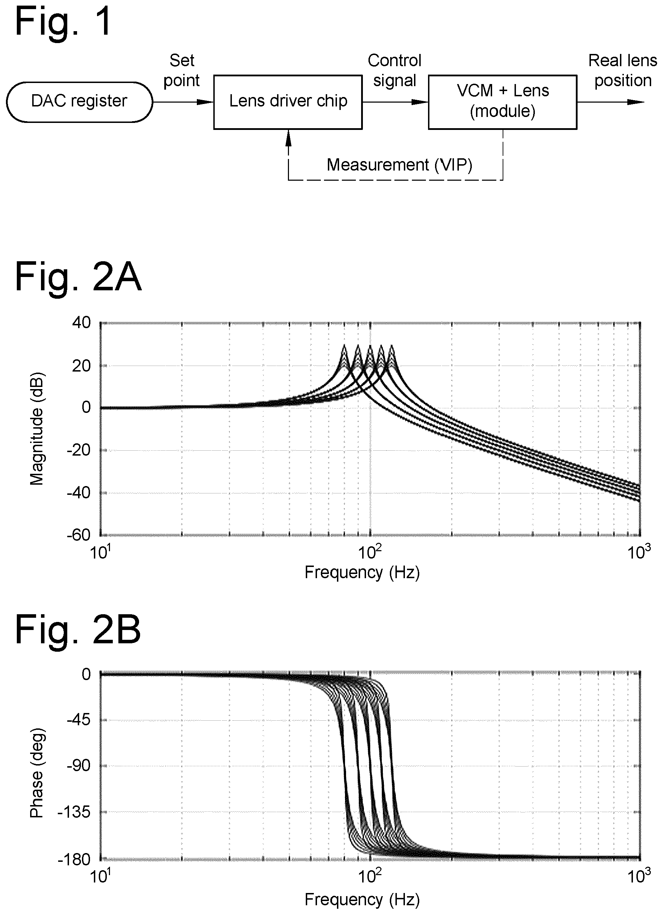

Figures 2A and 2B shows a representation of a family of possible Transfer functions plots from equation 1 describing different device behaviors wherein each transfer function represents the positions of the lens for different control signals. Figure 2A shows the Bode magnitude plot of several VCM transfer functions corresponding respectively to several different devices. The horizontal axis of Figure 2A shows the frequency in Hertz (Hz) and the corresponding vertical axis shows the magnitude of the transfer functions in decibels (dB).

Figure 2B shows the corresponding phase Bode plots wherein the horizontal axis represents the frequency in Hertz (Hz) and the vertical axis represents the phase angle of the transfer function in degrees.

The large-scale manufacturing of the devices imposes requirements on the technology due to the high production rate and OL, CL, SS devices have different advantages and disadvantages.

Related to this, a distinction can be made between three types of adaptations and tunings required by the device.

The first type of adaptation and tunning of the lens module would be when the characterization is performed outside of the production line, often on a large representative batch of the VCM and lens modules. The result may be a statistics determining the dynamics of (some representative test set of) the VCM and lens modules. This characterization of the statistical behavior of the VCM and lens modules is performed in a laboratory and can be done using a full range of high-grade equipment like lasers, temperature and pressure chambers, for relatively long periods of measurements.

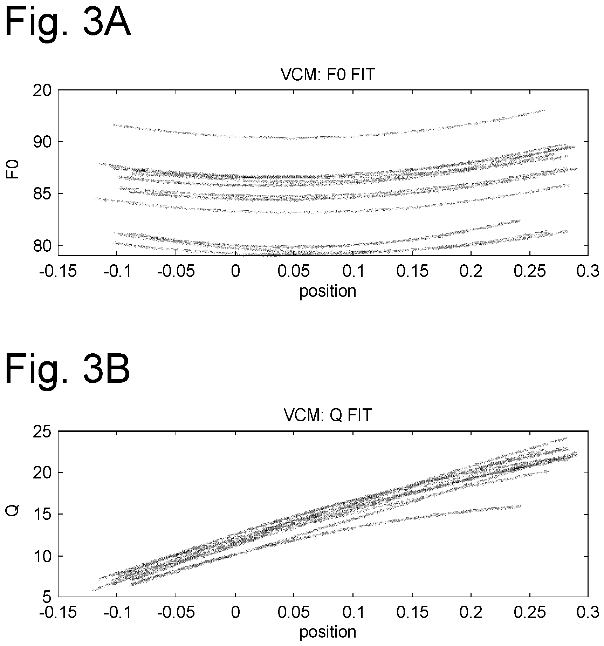

However, it has the advantage of not slowing down the operation of the production line, as it is performed outside of it. The typical range of behaviors measured in frequency domain with this method may look as shown in Figures 2A and 2B. The identified values of the dynamic parameters may depend also on the position of the lens. This can be seen in Figures 3A and 3B. The main disadvantage of this type of adaptation and tunning is that it results in wide ranges for the estimates of the parameters in all possible environments. This means that the adjustment of the lens module position during use of the device would not be very accurate, resulting in low quality images.

The second type of adaptation and tunning of the lens module is called production calibration as it is performed during the production process on each product item. This means that it needs to rely on a much more limited set of measurements, as otherwise it would excessively delay the production process increasing costs. Since it takes time for each product item, it affects the productivity and therefore the unit price. Therefore it is highly undesirable to spend time on production calibration for a large volume of manufactured products.

The third type of adaptation and tunning of the lens module is performed during the normal operation of the consumer device using the measurements signals available in a driver chip of the normal phone. The calibration could take place during the start-up of the phone, or just after the phone application is launched. For example the device may comprise a Hall sensor data for position (P) and/or voltage (V) and/or current (I) measurement with relatively limited resolution. This calibration does not affect the productivity of the manufacturing process. However, it needs to be performed fast, so that user experience is not affected and the user does not notice it. One possibility is to use the time available during the startup of the user-level camera application, by injecting a sequence of signals in the VCM, which would permit to quickly adjust the dynamic characteristics of the VCM obtained during characterization.

It is clear from the above, that the second type of adaptation and tunning of the camera system wherein production calibration is performed is to be avoided, since it directly impacts the financial side of the production by slowing down the manufacturing process. The first type wherein characterization is performed outside of the production line has no such disadvantages. However, it still has the inconvenient that it results in wide ranges for the estimates of the parameters in all possible environments.

The values of the parameters from equation 1 in the actual product VCM are uncertain and depend on unit-to-unit differences, environmental conditions, product aging and maybe others. This uncertainty is one of the main challenges for the consumer-grade products operation in real-life outdoor environment.

Open-loop control configurations typically require a difficult compromise - they either can deliver limited and/or unreliable performance in different operating conditions and device life-span, or they require extensive and fragile characterization and production calibration, which typically contradicts the required low unit price.

Closed-loop control configurations are less sensitive and require shorter characterization and calibration. In the best case, the goal is to have no production calibration at all. However they require additional hardware for position sensing, for example Hall sensor. This increases the price of the devices.

In open-loop control configurations, typical approaches involve making the driver chip generate a motion control signal having a robust shape, which is not sensitive to the variations of the different parameters. This is well-known and usually referred as "input shaping" methods. Examples of input shaping methods can be found in "Optimal reference shaping for dynamical systems: theory and applications", CRC Press, 2009, by Singh, T. and "Command shaping for flexible systems: A review of the first 50 years", International journal of precision engineering and manufacturing, 153-168, 2009, by Singhose, W.

In an example of such an input shaping method, the parameters $F_0$ and $Q$ can be used by an open-loop control configuration to design a feed-forward signal. The feed-forward signal will be used to control the lens module to the desired position. This could be done using the so-called "input-shaping" formulas depending on the parameters $F_0$ and $Q$. Figures 3A and 3B show examples of values obtained during the characterization process for the physical parameters $F_0$ and $Q$ for different operating positions of the lens module and different environment conditions. The input-shaping signal is a sequence of pulses at times $t_i$ with magnitudes $A_i$. For instance, a kind of input-shaping signal is the so-called "Zero-vibration shaper" and comprises two pulses defined by:

$$\begin{bmatrix} A_i \\ t_i \end{bmatrix} = \begin{bmatrix} \dfrac{1}{1+K} & \dfrac{K}{1+K} \\ 0 & \dfrac{\pi}{\omega\sqrt{1-\zeta^2}} \end{bmatrix},$$

$$(\text{equation } 2)$$

wherein:

$$K = e^{\left( \frac{-\zeta \pi}{\sqrt{1-\zeta^2}} \right)}.$$

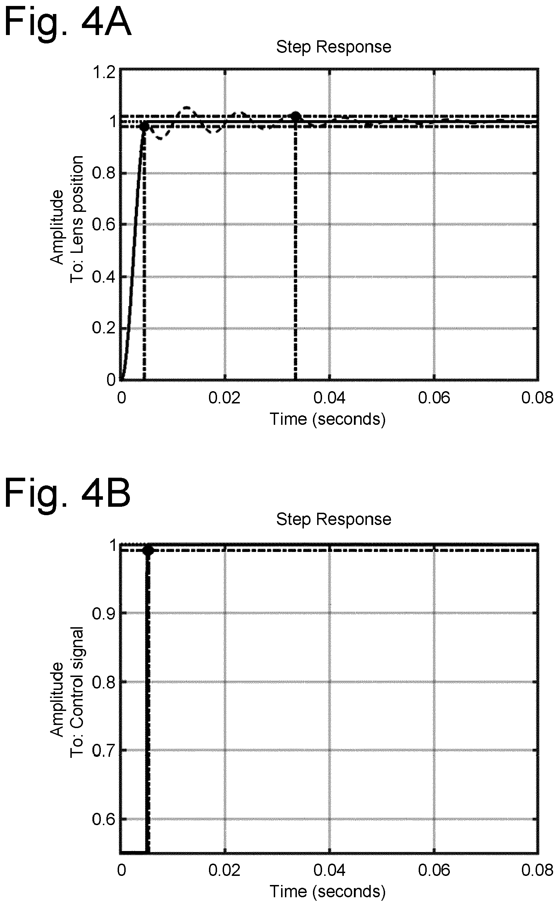

An input shaping signal comprising a number n of samples is known as an n steps input shaping signal. The application of such methods requires good knowledge of the involved parameters, as discussed in relation to open-loop control configuration. Otherwise the performance due to residual vibrations of the lens module may deteriorate drastically, as shown in Figures 4A and 4B for an open loop control configuration using a zero-vibration shaper as the input shaping signal. Figures 4A and 4B show respectively the lens position and the control signal. In Figures 4A and 4B, the horizontal axis represents time in seconds and the vertical axis represents the amplitude of the respective represented signal. From Figures 4A and 4B, it can be seen that the time needed for the method to set the position of the lens to have less than a 2% overshoot error with 5% uncertain $F_0$ is more than 30 milliseconds, offering a poor performance. The solid line in Figures 4A and 4B show the exact value of the parameters and the dashed line shows the system behavior with mismatched parameters, that is, when the values of the parameters assumed during the design phase do not match with the real values of the parameters when the system is in use.

This behaviour can be improved by introducing an input shaping signal with more pulses, for example the so called "Zero Vibration and Derivative shaper" which comprises three pulses as shown in equation 3:

$$\begin{bmatrix} A_i \\ t_i \end{bmatrix} = \begin{bmatrix} \dfrac{1}{1+2K+K^2} & \dfrac{K}{1+2K+K^2} & \dfrac{K^2}{1+2K+K^2} \\ 0 & \dfrac{\pi}{\omega\sqrt{1-\zeta^2}} & \dfrac{2\pi}{\omega\sqrt{1-\zeta^2}} \end{bmatrix}.$$

(equation 3)

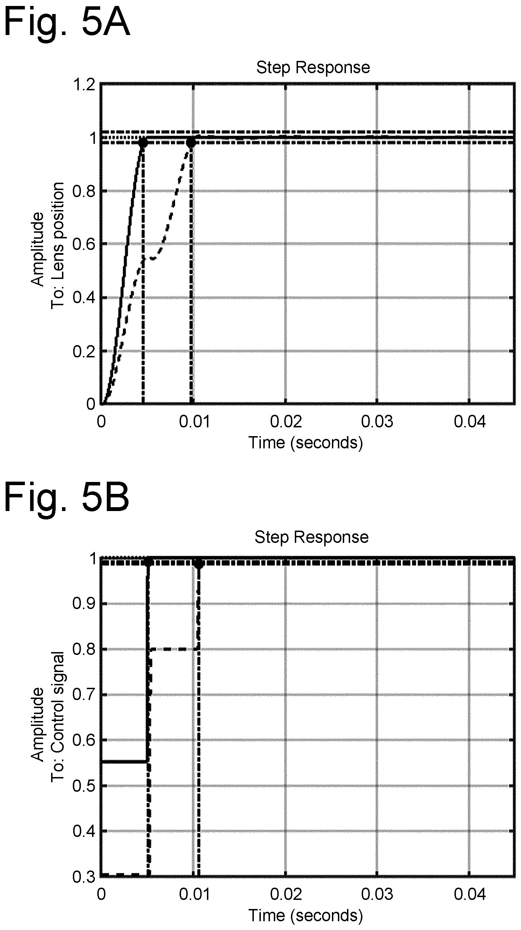

The reduction of the effect of the uncertainty by composing inputs with more steps, at the cost of longer transient times is shown in Figures 5A and 5B, which represent the same signals than Figures 4A and 4B but this time for an input shaping signal comprising three and two steps and not having mismatched parameters. As we can see, a three step approach means longer transient times than a two step approach but still shorter than the two step approach with mismatched parameters shown in Figures 4A and 4B.

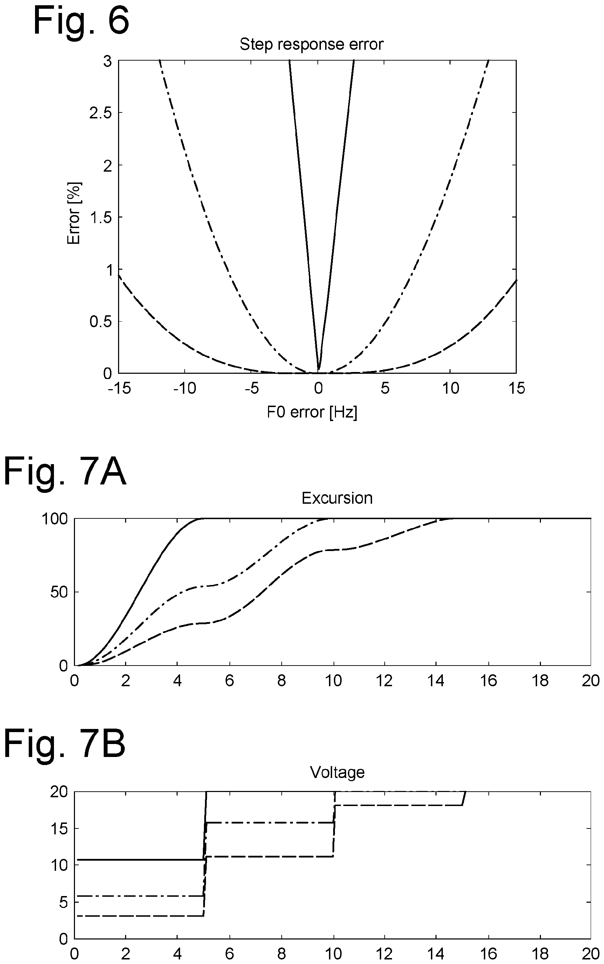

However following this prior art, making input signals to the VCM more robust to parameter variations, leads to slower position response during actual operation by the consumer of the device, as seen on Figure 7 and Figures 5A and 5B, which may result in lower quality of the camera pictures in some situations. Therefore increasing the number of pulses may slow down the transient, so this is not a solution, which can be used always. There is still a strong incentive to have better estimate of the dynamic parameters (F, Q) and thus being able to use the less-conservative shapers.

Closed-loop control configurations based on position feedback, where the goal is to reduce the system sensitivity to parameter variations, are well known. However many of these methods require extremely complex computations, which are not possible online on the limited hardware of the lens driving chip.

"Adaptive control" methods are also well known and can be applied in both closed-loop and self-sensing control configurations, but they need relatively long time to adapt and converge to the parameter changes. Using only these approaches may result in reduced quality of camera operation for seconds, perhaps tens of seconds after the camera startup by the user.

Figure 1 shows an example of a camera system wherein a lens driver chip generates a control signal to drive the actuator and lens module. The control signal in Figure 1 is generated based on a feedback measurement at the actuator and lens module. The feedback measurement in Figure 1 can be a position signal feedback and/or a voltage and current signal feedback.

US Patent No. 7489471 explores the use of available long off-line characterization data and the possibility of correcting such data with fast on-line calibration.

As explained, all the known approaches either use expensive hardware for position sensing such as closed-loop control configurations, have limited/unreliable performance, require long calibration times either at production stage, thereby having an impact on the price, or when being in use, causing inconvenient delays for the user.

Thus, a new approach is needed to improve the adjustment of the lens without the cited disadvantages.

## Summary of the invention

The proposed approach offers possibilities to combine low-cost hardware and fast production rate requirements by combining the measurements available from the characterization with the calibration. This permits to keep the calibration phase short and to reduce the estimates of the parameters ranges from characterization. The invention will be explained for a self-sensing control configuration, but it is not limited to that kind of configuration and could also be used, for example, with a closed loop control configuration.

Existing solutions do not have a calibration step. They use configuration options to specify the degree of uncertainty of the dynamic parameters (like $F_0$ and Q), probably based on off-line characterization measurements and correspondingly shaping the control signals in a conservative robust way, thus reducing the performance and increasing the time to move between desired lens positions.

## Brief description of the drawings

The present invention will be discussed in more detail below, with reference to the attached drawings, in which:

Figure 1 schematically shows a control loop for a camera system according to the prior art.
Figures 2A and 2B show a representation of a VCM Transfer function from control signal to position for a camera system.
Figures 3A and 3B show a representation of values obtained during the characterization of physical parameters F0 and Q for different operating points of the lens and different environment conditions.
Figures 4A and 4B show a representation of the control signal and the position signal as a function of time of a camera system.
Figures 5A and 5B show another representation of the control signal and the position signal as a function of time of a camera system.
Figure 6 shows the step response error as a function of the uncertainty of parameter $F_0$ for a two-step, a three-step and a four step input shaping signal and error [%] = (requested position - actual position) divide by the actual position.
Figures 7A and 7B show the lens position (excursion) and the voltage of the input shaping signals for one, two and three steps.
Figure 8 schematically shows a camera system comprising a motor control device according to an embodiment of the invention.
Figures 9A and 9B show nonlinear pattern curves of parameters.
Figure 10 shows an example of the calibration of a camera system according to an embodiment of the invention.
Figures 11A and 11B show the lens position and control signal during a calibration process according to the invention.
Figures 12A and 12B show the voltage of the actuator during a calibration process according to the invention.
Figure 13 shows a flowchart of a method of generating characterization information according to an embodiment of the invention.
Figure 14 shows a flowchart of a method of generating characterization information according to an embodiment of the invention.

The figures are meant for illustrative purposes only, and do not serve as restriction of the scope or the protection as laid down by the claims.

## Description of embodiments

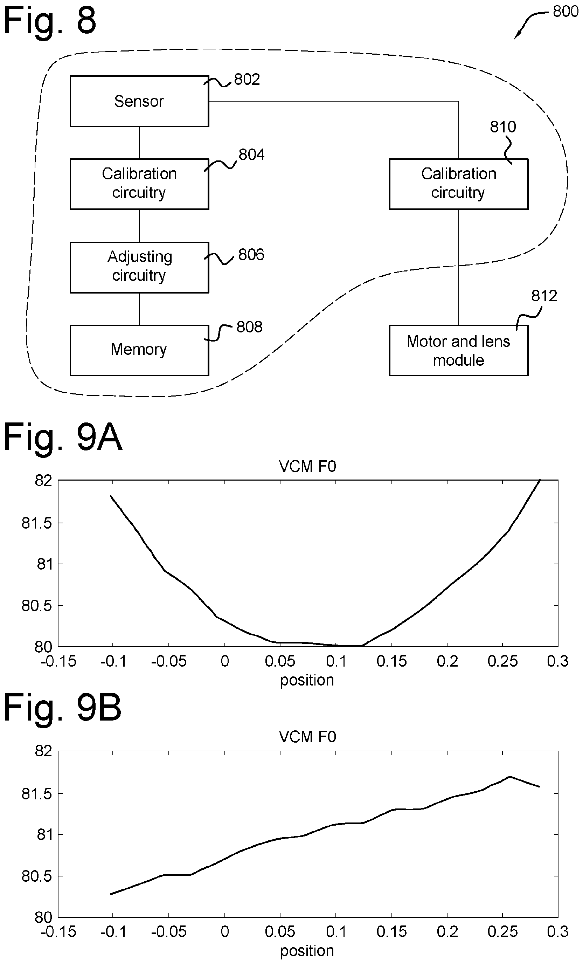

Figure 8 schematically shows a camera system comprising a motor control device 810 according to an embodiment of the invention. The motor control device 800 comprises a sensor 802, a calibration circuitry 804, an adjustment circuitry 806, a memory 808 and a driver 810. The camera system of Figure 8 further comprises a motor and a lens module 812.

The memory 808 is configured to receive and store characterization information. The memory 808 is further coupled to the adjustment circuitry 806. In this way, the memory 808 can send and receive information to and from the adjustment circuitry 806. The calibration circuitry 804 is coupled to the driver 810 and to the sensor 802. The calibration circuitry 804 can send and receive information to and from the driver 810 and to and from the sensor 802. The calibration circuitry 804 is configured to control the driver 810 and the sensor 802 to generate calibration information for the motor 812. The adjustment circuitry 806 is coupled to the calibration circuitry 804 and to the memory 808. The adjustment circuitry 806 comprises a first input connected to the memory 808 and a second input connected to the calibration circuitry 804. The adjustment circuitry 806 is configured to adjust the first input based on the second input. The first input is configured to receive characterization information from the memory 808 and the second input is configured to receive calibration information from the calibration circuitry 804.

The characterization information is based on a pattern representing common features of one or more parameters related to the behaviour of a plurality of lens modules at a plurality of positions. The adjustment circuitry 806 receives the characterization information at the first input from the memory 808 and receives the calibration information at the second input from the calibration circuitry 804. The adjustment circuitry 804 is configured to adjust the received characterization information based on a difference between the characterization information and the calibration information at a determined position among the plurality of positions. The calibration circuitry 804 is connected to the driver 810 and to the sensor 802 such that can control the driver 810 and the sensor 802 to generate the calibration information for the motor.

As said, the differences between the behavior of different individual lens modules can be quite big, but each individual lens module has a behavior that follows a similar pattern. In this way, a similar pattern for each of one or more parameters characterizing the behavior of a specific lens module can be extracted and stored in the memory 808 of the camera system. During a calibration step of the lens module, only differences due to environmental conditions will have to be calibrated for each of these one or more parameters characterizing the behavior of the lens module. This allows to reduce calibration errors without requiring a very conservative control signal, which will slow down the starting up phase of the camera system.

By performing the calibration step during the start-up of the camera system, it is possible to correct the characterization information stored in the memory 808 and based on previous obtained parameters which are available from a characterization phase.

During the calibration phase, the characterization information stored in the memory 808 is adjusted by the adjustment circuitry 806 based on the measurements of one or more available signals related to the motor and lens module 812, such as for instance a voltage (V) signal, a current (I) signal and/or a position (P) signal. The calibration circuitry 804 can control the sensor 802 to detect and measure the one or more signals. In this way, the sensor may detect a current and a voltage. In an alternative embodiment, the sensor may comprise a Hall sensor configured to measure a position of the lens.

The adjusted one or more parameters characterizing the behavior of the camera system can then be used online in many possible ways to drive the lens module. For example, the adjusted one or more parameters can be used to generate a drive signal for the motor 812 of the camera system wherein the drive signal could be an "input shaping" kind of drive signal to reduce the residual vibration. The characterization information may comprise one or more parameters used to characterize the behavior of the lens module and is stored as characterization information in the memory 812. The one or more parameters may be a resonant frequency ($F_0$) and/or quality factor (Q) values of a camera lens module obtained at different positions of the lens during a characterization phase. The one or more parameters may be any other suitable value related to the lens behavior.

It can be observed from the characterization information shown in Figure 3, that the changes of system dynamics reflected in the parameter values $F_0$ and Q have a structure, which, as explained, can be exploited. Specifically, Figure 3 shows a quadratic function trend and a shift trend of the one or more parameters. In this way, the characterization information related to several measurements performed with the lens module at a specific position can be aligned. As the difference between different aligned characterization information is not very big, a less-conservative input-shaping, or other design, may be applied as explained above. In this way, an averaged characterization information comprising a representative pattern can be obtained and stored in the memory 808.

However there are significant differences between the nonlinear pattern curves shown in Figures 9A and 9B and the actual values on each individual product, as seen in Figure 3. Therefore the direct use of the values from **Error! Reference source not found.would** require very robust shapers with too many steps. Therefore the nonlinear pattern needs to be adjusted before being used to design the correct control signal, otherwise either too big errors or very conservative will be observed, and therefore slow input shape needs to be used.

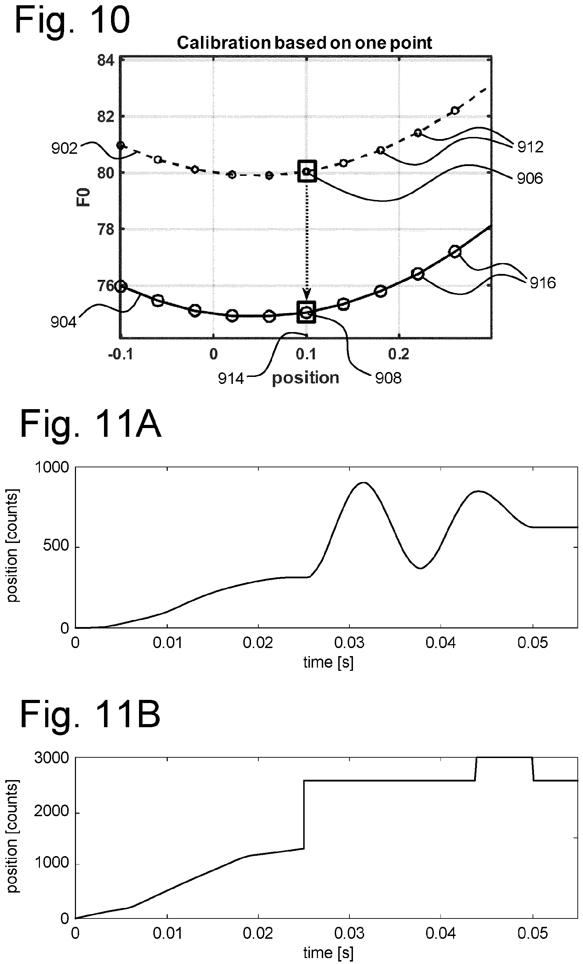

During the calibration phase, the adjustment circuitry 806 may control the driver 810 to inject a square signal at the input of the motor 812, which would aim to excite the vibration so that calibration information which used to adjust/determine the parameters $F_0$ and Q values can be obtained at one particular position of the lens module. The calibration information is used then to shift the whole characterization data stored in memory 808 into a place which corresponds to the current lens dynamics, as shown for example for the parameter $F_0$ on Figure 10 wherein the horizontal axis of the graph represents the lens position and the v axis represents the parameter $F_0$. The curve 902 corresponds to the characterization data stored in the memory 808. Each of the values 912 may be obtained during a characterization phase by calculating an average value for $F_0$ for several camera lens at a specific position. The values 912 may be stored in the memory 808 associated to their respective corresponding position, for instance in a look up table. The characterization information may be stored in the memory 808 as some formulas which describe the relationship between F0/Q and the respective corresponding position. During the calibration phase the value 908 for the parameter $F_0$ at a lens position 914 may be obtained by the calibration circuitry 804 by controlling the sensor 802 and the driver 810 as explained above. The values of the curve 902 can be modified to obtain the curve 904 which is a shifted version of the curve 902. This can be done, for instance, by calculating the difference between the value 906 stored in the memory 808 as characterization data of the parameter $F_0$ at the lens position 914 and the value 908 obtained during the calibration phase. The calculated difference can be used to adjust the rest of the values 912 at the adjustment circuitry 806 to obtain the values 916. The same approach can be used for the quality factor Q. The control signal and the lens movement from the moment on which the camera system is switched on are shown on Figures 11A and 11B, respectively. The horizontal axis of Figures 11A and 11B show time in seconds while the vertical axis show respectively the actual physical position of the camera and the input control signal used to obtain said physical position, in this case electrical current.

An example of a possible calibration algorithm will be explained now.

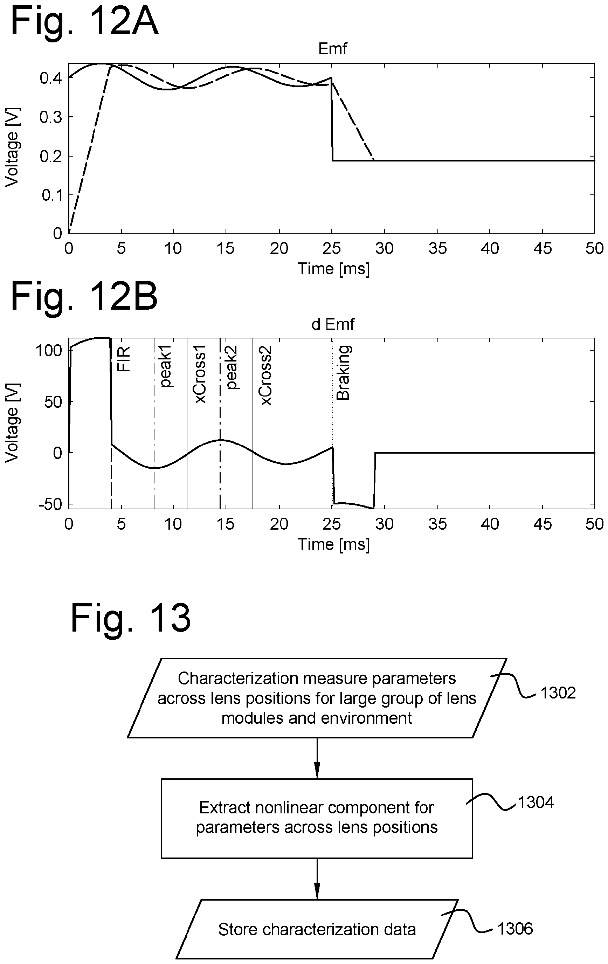

The voltage of the motor during the calibration step is shown on Figure 12A has the plots of both the actual signal, as well as the moving averaged (MA) or otherwise filtered version of the voltage. The voltage is then filtered using a Finite-Impulse Response (FIR) filter, specifically a Moving Average filter. FIR filters have a known group delay which can be used to reduce complexity of the signal processing applied. The output and input signals of the FIR filter are shown on Figure 12A where the discontinuous line corresponds to the output signal of the FIR filter and the continuous line corresponds to the input signal of the FIR filter. When the motor 812 is injected with the square signal during calibration step, the voltage on the VCM is detected which is the input signals of the FIR filter. The square signal which injected to the motor 812 is not required to be an input shaping signal with more pulses.

After the Moving-average (MA) filtering step, the Direct Current (DC) component of the filtered voltage may be removed from the filtered signal by differentiating the filtered signal by a differentiating filter in the digital domain. The differentiating filter and the MA filter can be combined in a single filter. The differentiated signal of the FIR filter output is shown on Figure 12B. However, if another kind of filter is used, this step of removing the DC component from the filtered signal may be skipped.

After removing the DC component from the filtered signal, the delay introduced by the FIR filter needs to be compensated. The group delay of a FIR filter can be obtained from the length of the FIR filter using known methods, and then used to shift in time the filtered signal without DC component based on the group delay.

After compensating for the delay, a compensation for the differentiation may be performed on the resulting signal. The differentiation would amplify the high-frequency noise in the measurement and there are many practical ways to improve this. One simple practical approach is to start with zero initial conditions and integrate (summate) the filtered differentiated signal. This effectively reverts the differentiation effect on the noise.

The time between peaks (peak1 and peak2 in Figure 12B) in the filtered differentiated signal can be used to determine the oscillation period of the differentiated signal. The filtered differentiated signal before braking can be used to determine F0 and Q. F0 and Q can be determined by the relationship between the peaks and the time of the filtered differentiated signal. In one embodiment, the oscillation frequency/ resonant frequency $F0 = \frac{1}{2(t(peak2)-t(peak1))}$

. In other embodiment, the oscillation frequency/ resonant frequency $F0 = \frac{1}{(t(peak3)-t(peak1))}$ . Q is determined by the relationship between the peaks and the time of the filtered differentiated signal. The parameter damping ratio, which is the inverse of the parameter quality Q, can be obtained as $\zeta = \frac{\delta}{\sqrt{\delta^2+(2\pi)^2}}$ , where $\delta = ln\left(\left|\frac{V(peak1)}{V(peak3)}\right|\right)$

or $\delta = ln\left(\frac{V(peak1)}{V(peak3)}\right)$ . The Absolute value of any peak of the filtered differentiated signal is decreasing with time, therefore, $\frac{V(peak1)}{V(peak3)}$ is always greater than 1 which means the goal of $\delta$ is to measure how fast the peaks decrease. Alternatively, the ratio of V(peak1) and V(peak2) can be used to determine $\delta$. The system parameter F0 can be determined using the time between the peaks. A sequence of peaks including the wave ridge and troughs of the signal in Figure 12B is observed shown as peak1, peak2, peak 3 and so on. Braking in Figure 12B means the time to start deceleration so that the motion can be zero velocity. Emf in Figure 12A and 12B is the Electro-Magnetic Force which is generated due to the signals in 12A. The voltage of signals in 12A will affect the magnitude of the Electro-Magnetic Force.

In one embodiment, the calibration information at a determined position among the plurality of positions can be used to obtain the resonant frequency (F0) and/or quality factor (Q) values of a camera lens module. The resonant frequency (F0) and/or quality factor (Q) values of a camera lens module is usable to generate a drive signal to drive the motor based on equation 2 or equation 3 or other equations. In the embodiment, the motor is controlled to generate calibration information at each position among a plurality of positions of the lens module. Then, one or more parameters representing the behaviour of the lens module are determined based on peak voltage or current values of the generated calibration information wherein one or more parameters representing the behaviour of the lens module is usable to generate a drive signal to drive the motor. According to Figure 12B, the absolute value of the voltage of the peak1 is greater than the absolute value of the voltage of the peak3. Therefore $\delta$ is known by $\delta = ln(|\frac{V(peak1)}{V(peak3)}|)$ . And $\zeta$ is known by $\zeta = \frac{\delta}{\sqrt{\delta^2 + (2\pi)^2}}$ . And Q is known by $\zeta$ = 1/(2 * Q) . And F0 is known by F0 = $\frac{1}{2(t(peak2)-t(peak1))}$ . Q is determined by the relationship between the peaks and the time of the filtered differentiated signal. According to Figure 12B, $t(peak2)$ - $t(peak1)$ is about 6ms, therefore, F0 is about 83.3Hz for one position. In the embodiment, the resonant frequency (F0) and/or quality factor (Q) values for all positions can be determined based on the calibration information of all the positions. The characterization information is not used to determine the resonant frequency (F0) and/or quality factor (Q) values so that there is no need to store the characterization information in the memory and therefore, the size of the memory can be reduced. When determining the resonant frequency (F0) and/or quality factor (Q) values without considering the characterization information, it may require long time to obtain a more precise resonant frequency (F0) and quality factor (Q) for the reason that calibration information of all the positions is needed and therefore a long calibration phase is needed. That is to say, for each position of the camera lens module, the calibration information in Figure 12A and 12B is used to obtain the Q and F0 for each position of the camera lens module. When the calibration information for each position of the camera lens is obtained, resonant frequency (F0) and quality factor (Q) for each position of the camera lens are obtained.

In another embodiment, the calibration information at a determined position among the plurality of positions as well as the characterization information can be used to obtained the resonant frequency (F0) and/or quality factor (Q) values. The resonant frequency (F0) and/or quality factor (Q) values is usable to generate a drive signal to drive the motor according to equation 2 or equation 3 or other equations. According to Figure 12B, the absolute value of the voltage of the peak1 is greater than the absolute value of the voltage of the peak3. $\delta$ is determined by

$$\delta = ln\left(\left|\frac{V(peak1)}{V(peak3)}\right|\right)$$ or $$\delta = ln\left(\frac{V(peak1)}{V(peak3)}\right)$$ . And $\zeta$ is known by $\zeta = \frac{\delta}{\sqrt{\delta^2 + (2\pi)^2}}$ . Q is determined by $\zeta$=1/(2*Q).

And F0 is determined by $$F0 = \frac{1}{2(t(peak2)-t(peak1))}$$ . According to Figure 12B, t(peak2)-t(peak1) is about 6ms, therefore, F0 is about $\frac{1}{2*12ms} = 83.3\text{Hz}$ for one position. Then it comes to how to determine other F0 for other position. According to Figure 10, the trend/shape of the curve 902 is known by a look-up table or some functions stored in the memory. For one embodiment, if F0=75 is determined by calibration information for the position 0.1, then, the curve 904 can be determined if the trend/shape of the curve 904 is determined. The same trend/shape of the curve 904 is determined to have the same trend/shape of the curve 902. That is to say, F0 for other position is determined based on the known relationship between F0 and position. Because that the F0 of 908 can be determined by calibration information and F0 of other position can be determined by the known relationship between F0 and position, the embodiment permits to keep the calibration phase short and to reduce the estimates of the parameters ranges from characterization.

When using voltage and current as signals to determine the system parameters, the signal needs to be moved to a constant value, which could be for example the value of another step experiment, like the one just finished, but at a different lens position.

In another embodiment, the sums/integral of the positive and negative values of the signal can be used, instead of the peak values (peak1 and peak2 in Figure 12B). The integral of the positive and negative values of the signal can be used to determine $\delta$, wherein $\delta = ln(|\frac{\text{integral}(positive)}{\text{integral}(negative)}|)$ . This can have certain advantages with respect to noise of the measured signals.

Different formulas and methods can be used to as alternatives to the above explained algorithm in order to obtain the system parameters depending on the noise and measurement properties of the signals used. For example the zero-crossings, or peaks on Figure 12A could be used. The zero-crossing point for example, xCross1 and xCross2 in Figure 12B can be used to determine F0. Another alternative would be to not perform the differentiation step and just subtract the value of the two signals in Fig 12A after the known FIR group delay has expired.

Similar approaches as explained above can be applied when position (P) signals are available in addition to voltage-current (VI) signals. In Figure 12, the voltage on the VCM is detected and the voltage on the VCM is used as one calibration information for one position. Besides, the current on the VCM also can be used as one calibration information to determine/adjust the Q and F0 for one position. Besides, the Hall sensor data for position (P) also can be used as one calibration information to determine/adjust the Q and F0 for one position.

The actual shaping pulses during the movement of the lens may be more complicated than the most well-known square ones shown on the Figures. Different options are enumerated for example in "Optimal reference shaping for dynamical systems: theory and applications", CRC Press, 2009, by Singh, T.

Figure 13 shows a flowchart of a method to obtain the characterization information according to one embodiment of the invention. Step 1302 comprises measuring system parameters across a plurality of lens positions for a large group of lens modules and environment. Step 1304 comprises extracting the nonlinear components from the measured parameters across the plurality of lens positions. For instance, an average of the measured parameter can be calculated at each one of the plurality of lens positions. Finally, step 1306 comprises storing the data obtained after performing steps 1302 and 1304 as characterization information.

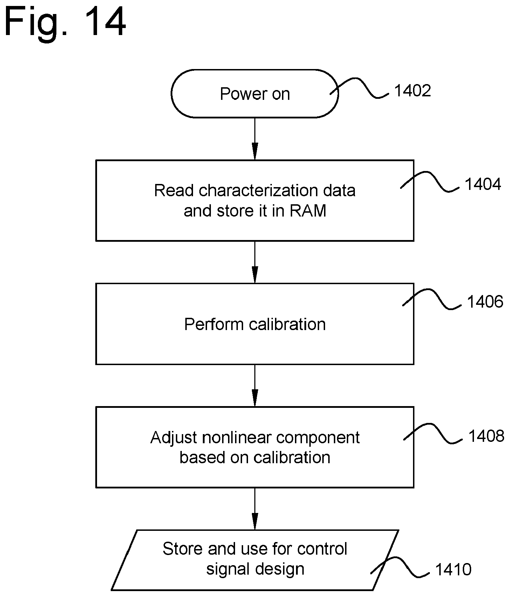

Figure 14 shows a flowchart of a method to obtain the characterization information according to one embodiment of the invention. Step 1402 comprises switching on the device. Step 1404 comprises reading the characterization information from the memory. Step 1406 comprises performing the calibration step to obtain the calibration information. Step 1408 comprises adjusting the nonlinear component of the characterization information based on the calibration information. Step 1410 comprises storing and suing the adjusted characterization information for control signal design.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, 10 reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A motion control device (800) for controlling a motor of a camera system, the motion control device (800) comprising:

   a driver (810) and a sensor (802);
   a memory (808) configured to receive and store characterization information;
   calibration circuitry (804) coupled to the driver (810) and to the sensor (802), and configured to control the driver (810) and the sensor (802) to generate calibration information for the motor;
   adjustment circuitry (806) coupled to the calibration circuitry (804) and to the memory (808), and configured to adjust a first input of the adjustment circuitry (806) based on a second input of the adjustment circuitry (806), wherein the first input is based on the characterization information and the second input is based on the calibration information;
   wherein the characterization information is based on a pattern representing common features of one or more parameters representing the behaviour of a plurality of lens modules at a plurality of positions and wherein the first input is adjusted based on a difference between the characterization information and the calibration information at a determined position among the plurality of positions,
   wherein the adjusted input is usable to generate a drive signal to drive the motor.

2. The motion control device (800) according to claim 1, wherein the driver (810) is configured to generate the drive signal to drive the motor based on the adjusted input.

3. The motion control device (800) according to claims 1-2, wherein the calibration information is generated when the sensor (802) detects a voltage or a current of the motor.

4. The motion control device (800) according to claims 1-2, wherein the calibration information is generated when the sensor (802) detects a position of a lens module of the camera system.

5. The motion control device (800) according to claim 4 wherein the sensor (802) comprises a Hall sensor.

6. The motion control device (800) according to any one of claims 1 - 5, wherein the calibration circuitry is further configured to generate the calibration information by controlling the driver (810) to generate a square signal for the motor.

7. The motion control device according to any one of claims 1 - 6, wherein the calibration circuitry (804) comprises a filter and is configured to generate the calibration information by filtering a signal received from the sensor (802).

8. The motion control device according to claim 7, wherein the filter is a finite impulse response filter.

9. The motion control device according to claim 7, wherein the calibration circuitry (804) is further configured to generate the calibration information by removing a direct current component from the filtered signal.

10. The motion control device according to claim 7, wherein the calibration circuitry (804) is configured to shift the filtered signal.

11. The motion control device according to claim 7, wherein the calibration circuitry (804) is configured to integrate the filtered signal.

12. A camera system comprising:

a lens module;
a motor; and
a motion control device according to any one of claims 1 - 11.

13. A method for controlling a motor of a camera system, the method comprising the following steps:

controlling, by a calibration circuitry (804), a driver (810) and a sensor (802) to generate calibration information for the motor, wherein the calibration circuitry (804) is coupled to the driver (810) and to the sensor (802); and
adjusting, by an adjustment circuitry (806), a first input of the adjustment circuitry (806) based on a second input of the adjustment circuitry (806), wherein the first input is based on characterization information stored in a memory (808) and the second input is based on the calibration information, wherein the adjustment circuitry (806) is coupled to the calibration circuitry (804) and to the memory (808);
wherein the characterization information is based on a pattern representing common features of one or more parameters representing the behaviour of a plurality of lens modules at a plurality of positions and wherein the first input is adjusted based on a difference between the characterization information and the calibration information at a determined position among the plurality of positions.

14. The method according to claim 12, further comprising generating a drive signal to drive the motor based on the adjusted input.

15. A method for controlling a motor to move a lens module of a camera system, the method comprising the following steps:

controlling the motor to generate calibration information at each position among a plurality of positions of the lens module; and
calculating one or more parameters representing the behaviour of the lens module based on peak voltage or current values of the generated calibration information.

# Fig. 1

Set point → Lens driver chip → Control signal → VCM + Lens (module) → Real lens position

DAC register → Set point → Lens driver chip

Measurement (VIP)

# Fig. 2A

# Fig. 2B

# Fig. 3A

VCM: F0 FIT

# Fig. 3B

VCM: Q FIT

# Fig. 4A

Step Response

# Fig. 4B

Step Response

# Fig. 5A

Step Response

# Fig. 5B

Step Response

# Fig. 6

Step response error

# Fig. 7A

Excursion

# Fig. 7B

Voltage

# Fig. 8

# Fig. 9A

# Fig. 9B

# Fig. 10

**Calibration based on one point**

# Fig. 11A

# Fig. 11B

## Fig. 12A

Emf

## Fig. 12B

d Emf

## Fig. 13

Characterization measure parameters across lens positions for large group of lens modules and environment — 1302

Extract nonlinear component for parameters across lens positions — 1304

Store characterization data — 1306

# Fig. 14

```
        ┌──────────────┐
        │   Power on    │ ──── 1402
        └──────────────┘
               │
               ▼
   ┌──────────────────────────┐
   │  Read characterization    │ ──── 1404
   │  data and store it in RAM │
   └──────────────────────────┘
               │
               ▼
   ┌──────────────────────────┐
   │   Perform calibration     │ ──── 1406
   └──────────────────────────┘
               │
               ▼
   ┌──────────────────────────┐
   │  Adjust nonlinear          │ ──── 1408
   │  component based on        │
   │  calibration               │
   └──────────────────────────┘
               │
               ▼
    /  Store and use for control  / ──── 1410
   /   signal design            /
```

Europäisches
Patentamt

European
Patent Office

Office européen
des brevets

# EUROPEAN SEARCH REPORT

Application Number

EP 22 20 4456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/041552 A1 (CALPE MARAVILLA JAVIER [ES] ET AL) 9 February 2017 (2017-02-09) | 1-4,6, 12-15 | INV. H02P7/025 |
| Y | * paragraphs [0006], [0053], [0054], [0075]; figures 1,8,18 * | 5,7-11 | G03B3/10 |
| Y | US 2021/281726 A1 (DHANDA ABHISHEK [US] ET AL) 9 September 2021 (2021-09-09) * paragraph [0051] * | 5 | |
| Y | US 2019/132532 A1 (TABUCHI YOSHIHISA [JP] ET AL) 2 May 2019 (2019-05-02) * paragraph [0004]; figure 19 * | 7-9,11 | |
| Y | EP 3 151 048 A1 (FOTONATION LTD [IE]) 5 April 2017 (2017-04-05) * paragraph [0093] * | 10 | |
| A | US 2016/070270 A1 (BEARD DAVID C [US] ET AL) 10 March 2016 (2016-03-10) * figure 21 * | 1-15 | |

TECHNICAL FIELDS
SEARCHED      (IPC)

H02P
G03D
G03B

The present search report has been drawn up for all claims

| Place of search | Date of completion of the search | Examiner |
|---|---|---|
| Munich | 22 March 2023 | Schneider, Gernot |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 4456

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2023

| Patent document cited in search report | | Publication date | Patent family member(s) | | Publication date |
|---|---|---|---|---|---|
| US 2017041552 | A1 | 09-02-2017 | NONE | | |
| US 2021281726 | A1 | 09-09-2021 | US | 11019241 B1 | 25-05-2021 |
| | | | US | 2021281726 A1 | 09-09-2021 |
| US 2019132532 | A1 | 02-05-2019 | CN | 209089101 U | 09-07-2019 |
| | | | TW | M575872 U | 21-03-2019 |
| | | | US | 2019131901 A1 | 02-05-2019 |
| | | | US | 2019132532 A1 | 02-05-2019 |
| EP 3151048 | A1 | 05-04-2017 | CN | 106664365 A | 10-05-2017 |
| | | | EP | 3004957 A1 | 13-04-2016 |
| | | | EP | 3151048 A1 | 05-04-2017 |
| | | | JP | 2017521710 A | 03-08-2017 |
| | | | KR | 20170024085 A | 06-03-2017 |
| | | | US | 2017155896 A1 | 01-06-2017 |
| | | | WO | 2016000874 A1 | 07-01-2016 |
| US 2016070270 | A1 | 10-03-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7489471 B

**Non-patent literature cited in the description**

- **LJUNG, L.** System Identification: Theory for the User. Prentice Hall, 1999
- **SINGH, T.** Optimal reference shaping for dynamical systems: theory and applications. CRC Press, 2009
- **SINGHOSE, W.** Command shaping for flexible systems: A review of the first 50 years. *International journal of precision engineering and manufacturing,* 2009, 153-168
- **SINGH, T.** Optimal reference shaping for dynamical systems: theory and applications. CRC Press, 2009